Europäisches Patentamt

European Patent Office

Office européen des brevets

(19)

(11) Publication number: **0 263 564 B1**

# EUROPEAN PATENT SPECIFICATION

(12)

(45) Date of publication of patent specification: **11.03.92** (51) Int. Cl.⁵: **C08G 67/02**, B01J 31/00

(21) Application number: **87201906.2**

(22) Date of filing: **05.10.87**

(54) **Catalyst compositions and olefin/CO-copolymerization process.**

(30) Priority: **06.10.86 NL 8602507**

(43) Date of publication of application:
**13.04.88 Bulletin 88/15**

(45) Publication of the grant of the patent:
**11.03.92 Bulletin 92/11**

(84) Designated Contracting States:
**AT BE CH DE ES FR GB IT LI NL SE**

(56) References cited:
**EP-A- 0 121 965**
**EP-A- 0 170 311**
**US-A- 3 984 388**
**US-A- 4 076 911**

(73) Proprietor: **SHELL INTERNATIONALE RE-
SEARCH MAATSCHAPPIJ B.V.**
**Carel van Bylandtlaan 30**
**NL-2596 HR Den Haag(NL)**

(72) Inventor: **Drent, Eit**
**Badhuisweg 3**
**NL-1031 CM Amsterdam(NL)**
Inventor: **Van Leeuwen, Petrus Wilhelmus**
**Nicolaas Maria**
**Badhuisweg 3**
**NL-1031 CM Amsterdam(NL)**
Inventor: **Wife, Richard Lewin**
**Badhuisweg 3**
**NL-1031 CM Amsterdam(NL)**

## Description

The invention relates to novel compositions suitable for use as catalysts in the preparation of polymers of carbon monoxide with one or more olefinically unsaturated compounds.

Research made by the Applicant into high molecular weight linear polymers of carbon monoxide with one or more olefically unsaturated compounds (for the sake of brevity referred to as A), in which the monomer units occur in alternating order and which polymers therefore consist of units of the general formula -CO-(A')-, wherein A' represents a monomer unit originating in a monomer A used, has recently led to the finding that these polymers can be prepared by using a catalyst composition based upon

a) a palladium compound,
b) an anion of an acid, and
c) a bidentate ligand of the general formula $R_1R_2M-R-MR_3R_4$, wherein M represents phosphorus, arsenic or antimony, $R_1$, $R_2$, $R_3$ and $R_4$ are hydrocarbyl groups, and R represents a bivalent organic bridging group containing at least two carbon atoms in the bridge.

Such a catalyst composition and such a process are known e.g. from Applicant's EP-A-121965. In a comparative example of that document, a catalyst composition comprising palladium acetate, an anion of phosphoric acid (pKa = 2.12) and 1,3-bis(diphenylphosphino)propane, is disclosed, but the yield of copolymer is very low. The teaching of the whole document is, that the catalyst composition should be based upon an anion of a very strong acid, that is, an acid having a pKa below 2, if it is to be effective in the copolymerisation of carbon monoxide and olefinically unsaturated compounds. The pKa values herein are those determined at 18 °C in aqueous solution.

Yet a need exists for catalyst compositions based upon anions of less strong acids, i.e. having a pKa above 2. Recent research by the Applicant resulted in the catalyst composition and process which are the subject of non-prepublished EP-A-262475. Herein it is disclosed that catalyst compositions wherein component b) is such an anion of a less strong acid, surprisingly may have an attractive performance, provided the pKa of the acid is smaller than 4 and the copolymerisation process is carried out at a temperature below 115 °C. In view of the low activity that was observed when carrying out the polymerization by using catalyst compositions which as component b) contained an anion of a weak acid with a pKa of at least 4, it was until recently assumed that anions of these acids were not eligible for use as the component b) in the above-mentioned catalyst compositions.

Further research into this subject has now shown that catalyst compositions containing an anion of a weak acid with a pKa of at least 4 but less than 6 as the component b), exhibit attractive activities, provided that an ortho-polarly substituted component c) is taken up therein. It has further been found that introduction of an ortho-polarly substituted component c) into the catalyst compositions containing an anion of a moderately strong acid with a pKa of at least 2 but less than 4 as the component b) results in a considerable enhancement of the activity of these compositions in the present polymer preparation. In the present patent application an ortho-polarly substituted component c) should be taken to be a bidentate ligand of the general formula $R_1R_2M-R-MR_3R_4$, in which M and R have meanings mentioned hereinbefore and $R_1$-$R_4$ are hydrocarbyl groups with the proviso that at least one of the groups $R_1$-$R_4$ represents a polarly substituted aryl group containing at least one polar substituent in a position ortho to M.

Catalyst compositions based upon a palladium compound, an anion of an acid with a pKa of at least 2, but less than 6 and an ortho-polarly substituted component c) are novel.

The present patent application therefore relates to novel catalyst compositions based upon

a) a palladium compound,
b) an anion of an acid, and
c) a bidentate ligand of the general formula $R_1R_2M-R-MR_3R_4$, wherein M represents phosphorus, arsenic or antimony, $R_1$, $R_2$, $R_3$ and $R_4$ are hydrocarbyl groups, and R represents a bivalent organic bridging group containing at least two carbon atoms in the bridge,

characterised in that the acid has a pKa of at least 2 but less than 6, and that at least one of the groups $R_1$-$R_4$ represents a polarly substituted aryl group containing at least one polar substituent in a position ortho to M.

The patent application further relates to a process for the preparation of polymers, characterised in that a mixture of carbon monoxide with one or more olefinically unsaturated compounds is polymerised by using a catalyst composition according to the invention.

The palladium compound used as component a) is preferably a palladium salt of a carboxylic acid and in particular palladium acetate. Both anions of moderately strong acids (having a pKa of at least 2 but less than 4) and anions of weak acids (having a pKa of at least 4 but less than 6) are eligible as component b). Examples of suitable moderately strong acids are mineral acids such as phosphoric acid, arsenic acid, nitrous acid and selenious acid and carboxylic acids such as tartaric acid, 2,5-dihydrobenzoic acid, acetoacetic acid, bromoacetic acid, 2-chlorobenzoic acid, α-chlorobutyric acid, α-chloropropionic acid, cyanoacetic acid, glycolic acid, 2-fluorobenzoic acid, orthophthalic acid, 2-furancarboxylic acid, iodoacetic acid, and 2-iodobenzoic acid. Examples of suitable weak acids are carboxylic acids such as acetic acid, adipic acid, isobutyric acid, heptanoic acid, $\gamma$-phenyl-butyric acid, pivalic acid and valeric acid, and phenols such as pentachlorophenol and pentafluorophenol. Good results have been obtained by using, inter alia, catalyst compositions containing an anion of a phosphoric acid, a tartaric acid or an acetic acid as the component b).

In the catalyst compositions component b) is preferably present in a quantity of from 0.5 to 200 and in particular of from 1.0 to 100 equivalents per gram atom of palladium. Component b) may be incorporated in the catalyst compositions in the form of an acid or in the form of a salt. Eligible salts are, among others, non-noble transition metal salts. When component b) is used as a salt of a non-noble transition metal, it is preferred that it be a copper salt. If desired, the components a) and b) may be used combined in a single compound. Examples of such compounds are palladium tartrate, palladium chloro acetate, palladium orthochloro benzoate and palladium pivalate.

In the bidentate ligand used as component c) M is preferably phosphorus. The groups $R_1$-$R_4$ present in component c) are preferably aryl groups which may or may not be substituted by polar groups and in particular phenyl groups which may or may not be substituted by polar groups, provided that at least one of these contains at least one polar substituent in a position ortho to M. Eligible polar substituents are halogens and groups of the general formulae $R_5$-O-, $R_5$-S-, $R_5$-CO-, $R_5$-CO-O-, $R_5$-CO-NH-, $R_5$-CO-$NR_6$-, $R_5R_6$N-, $R_5R_6$N-CO-, $R_5$-O-CO-NH- and $R_5$-O-CO-$NR_6$-, wherein $R_5$ and $R_6$ represent hydrocarbyl groups. Preference is given to the polar groups following, $R_5$-O-, $R_5$-S-, $R_5$-CO-O, $R_5R_6$N- and $R_5$-CO-$NR_6$, wherein $R_5$ and $R_6$ have the aforementioned meanings. Particular preference is given to components c) in which at least one of the groups $R_1$-$R_4$ contains an alkoxy group and more in particular a methoxy group as a polar substituent ortho to M. Furthermore, preference is given to components c) in which each of the groups $R_1$-$R_4$ is an aryl group containing a polar substituent in a position ortho to M. Finally, components c) are preferred in which the groups $R_1$-$R_4$ are the same.

In the components c) occurring in the catalyst compositions according to the invention at least one of the groups $R_1$-$R_4$ should be a polarly substituted aryl group containing at least one polar substituent ortho to M. In addition, the polarly substituted aryl group may also contain in one or more polar or non-polar substituents. If, in addition to the polar substituent which is present in a position ortho to M, the polarly substituted aryl group contains further polar substituents, these may be similar to the polar substituent in ortho position to M, or differ from it. The bivalent organic bridging group R preferably contains three carbon atoms in the bridge.

Components c) that can very suitably be used in the catalyst compositions according to the invention are 1,3-bis[di(2-methoxy-phenyl)phosphino]propane, 1,3-bis[di(2,4-methoxy-phenyl)phosphino]propane, 1,3-bis[di(2,6-dimethoxy-phenyl)phosphino]propane and 1,3-bis[di(2,4,6-trimethoxy-phenyl)phosphino]propane.

Good results have been obtained by using, interalia, catalyst compositions containing 1,3-bis-[di(2-methoxy-phenyl)phophino]propane as the component c). In the catalyst compositions component c) is preferably present in a quantity of 0.1-3 and in particular of 0.75-2 mol per mol of palladium compound.

In order to improve the activity of the present catalyst compositions it is preferred that a quinone be included therein as a component d). Besides benzoquinones which may or may not be substituted, other quinones, such as unsubstituted or substituted naphthaquinones and anthraquinones, are also eligible for use. Benzoquinones are preferred, especially 1,4-benzoquinone. The quantity of quinone used preferably amounts to 1-10000, and in particular 10-5000, mol per gram atom of palladium.

The polymerization by using the catalyst compositions according to the invention is preferably carried out in a liquid diluent. Very suitable liquid diluents are lower alcohols, such as methanol and ethanol. The polymerization may also be performed in the gaseous phase, if desired.

Eligible olefinically unsaturated organic compounds that can be polymerized with carbon monoxide with the aid of the catalyst compositions according to the invention are both compounds consisting exclusively of carbon and hydrogen and compounds which, in addition to carbon and hydrogen, contain one or more hetero-atoms. The catalyst compositions according to the invention are preferably used for preparing polymers of carbon monoxide with one or more olefinically unsaturated hydrocarbons. Examples of suitable hydrocarbon monomers are ethene and other $\alpha$-olefins, such as propene, butene-1, hexene-1 and octene-1 as well as styrene and alkyl-substituted styrenes, such as p-methyl styrene and p-ethyl styrene. The catalyst compositions according to the invention are especially suitable for use in the preparation of copolymers of carbon monoxide and ethane and in the preparation of terpolymers of carbon monoxide with ethene and another olefinically unsaturated hydrocarbon, in particular propene.

The quantity of catalyst composition used in the preparation of the polymers may vary within wide ranges. Per mol of olefinically unsaturated compound to be polymerized, such a quantity of catalyst is preferably used as to contain $10^{-7}$-$10^{-3}$, and in particular $10^{-6}$-$10^{-4}$, gram atom of palladium.

The preparation of the polymers is preferably carried out at a temperature of 20-115 °C and a pressure of 1-200 bar and in particular at a temperature of 30-100 °C and a pressure of 20-100 bar. In the mixture to be polymerized, the molar ratio of the olefinically unsaturated organic compounds relative to carbon monoxide is preferably 10:1-1:5 and in particular 5:1-1:2. The carbon monoxide used in the polymer preparation of the invention need not be pure. It may contain such contaminants as hydrogen, carbon dioxide and nitrogen.

The invention will now be illustrated with the aid of the following Examples.

Example 1

A stirred autoclave of 300 ml capacity was charged with a catalyst solution comprising
50 ml of methanol,
0,1 mmol of palladium acetate,
2 mmol of acetic acid (pKa = 4,75), and
0,1 5 mmol of 1,3-bis(diphenyl-phosphino)propane.

After air present in the autoclave had been removed by evacuation, ethene was introduced under pressure until a pressure of 30 bar was reached, followed by carbon monoxide until a pressure of 60 bar was reached. Subsequently, the contents of the autoclave were brought to 90 °C. After 5 hours the autoclave was cooled down to room temperature, and the pressure was released. No more than traces of polymer material were obtained.

Example 2

A carbon monoxide/ethene copolymer was prepared by substantially repeating Example 1, the differences being:
a) a catalyst solution was used which comprised phosphoric acid (pKa = 2,12) instead of acetic acid,
b) the reaction time was 2 1/2 hours instead of 5 hours, and
c) after the pressure had been released, the polymer formed was filtered off, washed with methanol and dried in vacuo at room temperature.
11 g of copolymer was obtained. Thus, the polymerization rate was 440 g copolymer/g palladium/hour.

Example 3

A carbon monoxide/ethene copolymer was prepared in substantially the same way as the copolymer of Example 2, except for the following differences
a) a catalyst solution was employed which comprised tartaric acid (pKa = 2.98) instead of phosphoric acid, and
b) the reaction time was 2 hours instead of 2 1/2 hours.
9.3 g of copolymer was obtained. Thus, the polymerization rate was 465 g copolymer/g palladium/hour.

Example 4

A carbon monoxide/ethene copolymer was prepared substantially in the same way as the copolymer of Example 2, except for the following differences
a) a catalyst solution was employed which comprised acetic acid instead of phosphoric acid and 1,3-bis[di(2-methoxy-phenyl)phosphino]propane instead of 1,3-bis(di-phenyl-phosphino)propane,and
b) the reaction time was 2 hours instead of 2 1/2 hours.
7.4 g of copolymer was obtained. Thus, the polymerization rate was 370 g copolymer/g palladium/hour

Example 5

A carbon monoxide/ethene copolymer was prepared substantially in the same way as the copolymer of Example 2, except for the following differences
a) a catalyst solution was employed which comprised 1,3-bis[di(2-methoxy-phenyl)phosphino]propane instead of 1,3-bis(di-phenyl-phosphino)-propane,and
b) the reaction time was 1/4 hour instead of 2 1/2 hours.
15.4 g of copolymer was obtained. Thus, the polymerization rate was 6160 g copolymer/g palladium/hour.

Example 6

A carbon monoxide/ethene copolymer was prepared substantially in the same way as the copolymer of Example 2, the differences being:
a) a catalyst solution was employed which comprised tartaric acid instead of phosphoric acid and 1,3-bis [di(2-methoxy-phenyl)-phosphino]propane instead of 1,3-bis(diphenyl-phosphino)-propane, and

b) the reaction time was 2 hours instead of 2 1/2 hours.

15.7 g of a copolymer was obtained. Thus, the polymerization rate was 785 g copolymer/g palladium/hour.

Of Examples 1-6, Examples 4-6 are examples according to the invention. In these examples, polymers were prepared by using catalyst compositions comprising an anion of an acid with a pKa of between 2 and 6 as the component b) and a bisphosphine in wich a polar group was present in a position ortho to phosphorus as the component c). Examples 1-3, in which catalyst compositions were used which comprised a bisphosphine in which no polar group was present in a position ortho to phosphorus as the component c), fall outside the scope of the invention. They have been included in the patent application for comparison. The carbon monoxide/ethene copolymers prepared according to Examples 2-6 had a melting point of 257 °C. With the aid of $^{13}$C-NMR analysis it was established that these polymers had a linear alternating structure and therefore consisted of units of the formula -CO-($C_2H_4$)-.

## Claims

1. Catalyst compositions which are based upon
     a) a palladium compound,
     b) an anion of an acid, and
     c) a bidentate ligand of the general formula $R_1R_2M$-R-$MR_3R_4$, wherein M represents phosphorus, arsenic or antimony, $R_1$, $R_2$, $R_3$ and $R_4$ are hydrocarbyl groups, and R represents a bivalent organic bridging group containing at least two carbon atoms in the bridge,
     **characterised in that** the acid has a pKa of at least 2 but less than 6, and that at least one of the groups $R_1$-$R_4$ represents a polarly substituted aryl group containing at least one polar substituent in a position ortho to M.

2. Catalyst compositions as claimed in claim 1, **characterised in that** component b) upon which they are based, is an anion of acid chosen from the group made up of phosphoric acid, tartaric acid and acetic acid.

3. Catalyst compositions as claimed in claim 1 or 2, **characterised in that** component c) upon which they are based, is a compound in which the groups $R_1$, $R_2$, $R_3$ and $R_4$ are aryl groups such as phenyl groups, with the proviso that at least one of these groups contains at least one polar substituent in a position ortho to M.

4. Catalyst compositions as claimed in one or more of claims 1-3, **characterised in that** component c) upon which they are based, is a compound in which the polar substituent occurring in a position ortho to M is a group $R_5$-O-, $R_5$-S-, $R_5$-CO-O, $R_5R_6$N- or $R_5$-CO-$NR_6$, wherein $R_5$ and $R_6$ represent hydrocarbyl groups.

5. Catalyst compositions as claimed in one or more of claims 1-4, **characterised in that** component c) upon which they are based, is a compound in which the polar substituent occurring in a position ortho to M is an alkoxy group, such as a methoxy group.

6. Catalyst compositions as claimed in one or more of claims 1-5, **characterised in that** component c) upon which they are based, is a compound in which the groups $R_1$-$R_4$ are the same, such as 1,3-bis[di(2-methoxyphenyl)-phosphino]propane.

7. Process for the preparation of polymers, **characterised in that** a mixture of carbon monoxide with one or more olefinically unsaturated compounds is polymerised by using a catalyst composition as claimed in any of claims 1 to 6.

## Revendications

1. Compositions catalytiques à base de :
     a) un composé du palladium,
     b) un anion d'un acide, et
     c) un ligand bidenté de formule générale $R_1R_2M$-R-$MR_3R_4$, dans laquelle M représente du phosphore, de l'arsenic ou de l'antimoine, $R_1$, $R_2$, $R_3$ et $R_4$ sont des groupes hydrocarbyle et R représente un groupe pontal organique bivalent renfermant au moins 2 atomes de carbone dans le pont,
     caractérisées en ce que l'acide présente un pKa d'au moins 2 mais inférieur à 6, et qu'au moins un des groupes $R_1$ à $R_4$ représente un groupe aryle polairement substitué, renfermant au moins un substituant polaire dans une position ortho par rapport à M.

2. Compositions catalytiques telles que revendiquées dans la revendication 1, caractérisées en ce que le composant b) sur lequel elles sont basées, est un anion d'un acide choisi dans le groupe constitué par l'acide phosphorique, l'acide tartrique et l'acide acétique.

3. Compositions catalytiques telles que revendiquées dans la revendication 1 ou 2, caractérisées en ce que le composant c) sur lequel elles sont basées, est un composé dans lequel les groupes $R_1$, $R_2$, $R_3$ et $R_4$ sont des groupes aryle tels que des groupes phényle, sous la condition qu'au moins un de ces groupes renferme au moins un substituant polaire en position ortho par rapport à M.

4. Compositions catalytiques telles que revendiquées dans une ou plus d'une des revendications 1 à 3, caractérisées en ce que le composant c) sur lequel elles sont basées, est un composé dans lequel le substituant polaire se trouvant en position ortho par rapport à M est un groupe $R_5$-O-, $R_5$-S-, $R_5$-CO-O, $R_5R_6$N- ou $R_5$-CO-NR$_6$, dans lesquels $R_5$ et $R_6$ représentent des groupes hydrocarbyle.

5. Compositions catalytiques telles que revendiquées dans l'une ou plus d'une des revendications 1 à 4, caractérisées en ce que le composant c) sur lequel elles sont basées, est un composé dans lequel le substituant polaire se trouvant en position ortho par rapport à M est un groupe alcoxy, tel qu'un groupe méthoxy.

6. Compositions catalytiques telles que revendiquées dans une ou plus d'une des revendications 1 à 5, caractérisées en ce que le composant c) sur lequel elles sont basées, est un composé dans lequel les groupes $R_1$ à $R_4$ sont identiques, tel que le 1,3-bis[di-(2,4-méthoxyphényl)phosphino]propane.

7. Procédé pour la préparation de polymères, caractérisé en ce que l'on polymérise un mélange de monoxyde de carbone avec un ou plus d'un composé à insaturation oléfinique en mettant en oeuvre une composition catalytique telle que revendiquée dans l'une quelconque des revendications 1 à 6.

**Patentansprüche**

1. Katalysatorzusammensetzungen auf der Basis von
   a) einer Palladiumverbindung,
   b) einem Anion einer Säure und
   c) einem Bidentatliganden der allgemeinen Formel $R_1R_2$-M-R-MR$_3R_4$, worin M Phosphor, Arsen oder Antimon bedeutet, $R_1$, $R_2$, $R_3$ und $R_4$ Kohlenwasserstoffgruppen darstellen und R eine zweiwertige organische Brückengruppe mit wenigstens 2 Kohlenstoffatomen in der Brücke bedeutet, dadurch gekennzeichnet, daß die Säure einen pKa-Wert von wenigstens 2 aber kleiner als 6 aufweist und daß wenigstens eine der Gruppen $R_1$ bis $R_4$ eine polar substituierte Arylgruppe darstellt, die wenigstens einen polaren Substituenten in einer ortho-Stellung zu M enthält.

2. Katalysatorzusammensetzungen nach Anspruch 1, dadurch gekennzeichnet, daß die Komponente b), auf welcher sie aufgebaut sind, ein Anion einer Säure aus der aus Phosphorsäure, Weinsäure und Essigsäure bestehenden Gruppe ist.

3. Katalysatorzusammensetzungen nach Anspruch 1 oder 2, dadurch gekennzeichnet, daß die Komponente c), auf welcher sie aufgebaut sind, eine Verbindung ist, worin die Gruppen $R_1$, $R_2$, $R_3$ und $R_4$ Arylgruppen sind, wie Phenylgruppen, mit der Maßgabe, daß wenigstens eine dieser Gruppen wenigstens einen polaren Substituenten in einer ortho-Stellung zu M enthält.

4. Katalysatorzusammensetzungen nach einem oder mehreren der Ansprüche 1 bis 3, dadurch gekennzeichnet, daß die Komponente c), auf welcher sie aufgebaut sind, eine Verbindung ist, worin der polare Substituent in einer ortho-Stellung zu M eine Gruppe $R_5$-O-, $R_5$-S-, $R_5$-CO-O-, $R_5R_6$N- oder $R_5$-CO-NR$_6$- ist, worin $R_5$ und $R_6$ Kohlenwasserstoffgruppen bedeuten.

5. Katalysatorzusammensetzungen nach einem oder mehren der Ansprüche 1 bis 4, dadurch gekennzeichnet, daß die Komponente c), auf welcher sie aufgebaut sind, eine Verbindung ist, worin der polare Substituent in einer ortho-Stellung zu M eine Alkyoxygruppe, wie eine Methoxygruppe ist.

6. Katalysatorzusammensetzung nach einem oder mehreren der Ansprüche 1 bis 5, dadurch gekennzeichnet, daß die Komponente c), auf welcher sie aufgebaut sind, eine Verbindung ist, worin die Gruppen $R_1$ bis $R_4$ gleich sind, wie 1,3-Bis[di(2-methoxyphenyl)phosphino]propan.

7. Verfahren zur Herstellung von Polymeren, dadurch gekennzeichnet, daß ein Gemisch aus Kohlenmonoxid mit einer oder mit mehreren olefinisch ungesättigten Verbindungen unter Verwendung einer Katalysatorzusammensetzung nach einem der Ansprüche 1 bis 6 polymerisiert wird.